# EUROPEAN PATENT APPLICATION

(11) **EP 4 131 537 A1**
(43) Date of publication of application: **08.02.2023**
(21) Application number: 21782310.3
(22) Date of filing: 15.02.2021
(51) Int. Cl.: H01M 10/052, H01M 10/054, H01M 10/0562, H01M 10/0585

(54) **LAMINATED BATTERY PRODUCTION METHOD AND LAMINATED BATTERY**

(30) Priority: 30.03.2020 JP 2020060223
(71) Applicant: Panasonic Intellectual Property Management Co., Ltd., Osaka-shi, Osaka 540-6207 (JP)
(72) Inventor: HONDA, Kazuyoshi, Osaka 540-6207 (JP); KAWASE, Akira, Osaka 540-6207 (JP); KOGA, Eiichi, Osaka 540-6207 (JP)
(74) Representative: Eisenführ Speiser
(86) International application number: PCT/JP2021/005397
(87) International publication number: WO 2021/199720

(57) **Abstract**

A method for manufacturing a laminated battery is a method for manufacturing a laminated battery in which a plurality of unit battery cells each having a negative-electrode layer, a positive-electrode layer, and a solid electrolyte layer located between the negative-electrode layer and the positive-electrode layer are laminated. The method includes a measuring step of measuring respective characteristics of the plurality of unit battery cells, an area adjusting step of adjusting respective effective areas of the plurality of unit battery cells on the basis of the respective characteristics of the plurality of unit battery cells as measured in the measuring step so that respective battery capacities of the plurality of unit battery cells fall within a predetermined range of value, and a laminating step of laminating the plurality of unit battery cells the effective areas of the plurality of unit battery cells being adjusted in the adjusting step.

## Description

### Technical Field

The present disclosure relates to a method for manufacturing a laminated battery and a laminated battery.

### Background Art

PTL 1 discloses an electric storage device including a series connection of battery cells containing graphene as a conductive auxiliary agent.

PTL 2 discloses combining and laminating unit batteries of different battery capacities on the basis of results of measurements of battery capacities and thereby fabricating a cell sheet including a parallel connection of the unit cells thus laminated.

PTL 3 discloses applying distributed pressure so that the periphery of a laminated battery is subjected to strong pressure.

### Citation List

### Patent Literature

PTL 1: Japanese Unexamined Patent Application Publication No. 2016-85965
PTL 2: Japanese Unexamined Patent Application Publication No. 2017-054871
PTL 3: Japanese Unexamined Patent Application Publication No. 2013-200940

### Summary of Invention

### Technical Problem

Of the conventional technologies, further improvement in reliability of a battery is required. Of laminated batteries, improvement in reliability is particularly required, as they are high in battery capacity and/or voltage.

To address this problem, the present disclosure provides, for example, a method for manufacturing a laminated battery with enhanced reliability.

### Solution to Problem

A method for manufacturing a laminated battery according to an aspect of the present disclosure is a method for manufacturing a laminated battery in which a plurality of unit battery cells each having a negative-electrode layer, a positive-electrode layer, and a solid electrolyte layer located between the negative-electrode layer and the positive-electrode layer are laminated. The method includes a measuring step of measuring respective characteristics of the plurality of unit battery cells, an area adjusting step of adjusting respective effective areas of the plurality of unit battery cells on the basis of the respective characteristics of the plurality of unit battery cells as measured in the measuring step so that respective battery capacities of the plurality of unit battery cells fall within a predetermined range of value, and a laminating step of laminating the plurality of unit battery cells the effective areas of the plurality of unit battery cells being adjusted in the adjusting step.

Further, a laminated battery according to an aspect of the present disclosure is a laminated battery in which a plurality of unit battery cells each having a negative-electrode layer, a positive-electrode layer, and a solid electrolyte layer located between the negative-electrode layer and the positive-electrode layer are laminated. Respective areas of the plurality of unit battery cells are not uniform, and of the plurality of unit battery cells, two unit battery cells located at both ends in a direction of laminating are both smaller in area than a unit battery cell located between the two unit battery cells.

### Advantageous Effects of Invention

The present disclosure makes it possible to enhance the reliability of a laminated battery.

### Brief Description of Drawings

[Fig. 1] Fig. 1 is a cross-sectional view schematically showing a configuration of a laminated battery according to an embodiment.
[Fig. 2] Fig. 2 is a cross-sectional view schematically showing a configuration of a laminated battery including intermediate electrode leads according to the embodiment.
[Fig. 3] Fig. 3 is a cross-sectional view schematically showing a configuration of a laminated battery including a sealing member according to the embodiment.
[Fig, 4] Fig. 4 is a cross-sectional view schematically showing a configuration of a laminated battery according to a modification of the embodiment.
[Fig. 5] Fig. 5 is a cross-sectional view schematically showing a configuration of a laminated battery including a sealing member according to the modification of the embodiment.
[Fig. 6] Fig. 6 is a flow chart for explaining a method for manufacturing a laminated battery according to the embodiment.
[Fig. 7A] Fig. 7A is a cross-sectional view showing an example of a laminated configuration of a laminated body formed in a laminated body forming step according to the embodiment.
[Fig. 7B] Fig. 7B is a cross-sectional view showing an example of a laminated configuration of a laminated body formed in the laminated body forming step according to the embodiment.
[Fig. 7C] Fig. 7C is a cross-sectional view showing an example of a laminated configuration of a laminated body formed in the laminated body forming step according to the embodiment.
[Fig. 7D] Fig. 7D is a cross-sectional view showing an example of a laminated configuration of a laminated body formed in the laminated body forming step according to the embodiment.
[Fig. 7E] Fig. 7E is a cross-sectional view showing an example of a laminated configuration of a laminated body formed in the laminated body forming step according to the embodiment.
[Fig. 7F] Fig. 7F is a cross-sectional view showing an example of a laminated configuration of a laminated body formed in the laminated body forming step according to the embodiment.
[Fig. 7G] Fig. 7G is a cross-sectional view showing an example of a laminated configuration of a laminated body formed in the laminated body forming step according to the embodiment.
[Fig. 7H] Fig. 7H is a cross-sectional view showing an example of a laminated configuration of a laminated body formed in the laminated body forming step according to the embodiment.
[Fig. 8A] Fig. 8A is a cross-sectional view showing an example of a laminated configuration of a unit battery cell formed in a compressing step according to the embodiment.
[Fig. 8B] Fig. 8B is a cross-sectional view showing an example of a laminated configuration of a unit battery cell formed in the compressing step according to the embodiment.
[Fig. 8C] Fig. 8C is a cross-sectional view showing an example of a laminated configuration of a unit battery cell formed in the compressing step according to the embodiment.
[Fig. 9] Fig. 9 is a schematic view showing a relationship between quantity of charging electricity and voltage at an early stage of charging of a unit battery cell according to the embodiment.
[Fig. 10A] Fig. 10A is a plan view for explaining an example of a site of cutting of a unit battery cell according to the embodiment.
[Fig. 10B] Fig. 10B is a plan view for explaining an example of a site of cutting of a unit battery cell according to the embodiment.

### Description of Embodiments

### (Underlying Knowledge Forming Basis of the Present Disclosure)

It is important for a laminated battery to be constituted by unit battery cells of uniform battery capacity. Variations in the battery capacity of the unit battery cells easily lead to over-charge and over-discharge in a series-connected laminated battery and tend to cause variations in the current value of the collecting leads of electrodes in a parallel-connected laminated battery, resulting in degradation in reliability of the batteries.

To address this problem, the present disclosure provides a method for manufacturing a laminated battery and a laminated battery with enhanced reliability.

### (Brief Overview of the Present Disclosure)

A method for manufacturing a laminated battery according to an aspect of the present disclosure is a method for manufacturing a laminated battery in which a plurality of unit battery cells each having a negative-electrode layer, a positive-electrode layer, and a solid electrolyte layer located between the negative-electrode layer and the positive-electrode layer are laminated. The method includes a measuring step of measuring respective characteristics of the plurality of unit battery cells, an area adjusting step of adjusting respective effective areas of the plurality of unit battery cells on the basis of the respective characteristics of the plurality of unit battery cells as measured in the measuring step so that respective battery capacities of the plurality of unit battery cells fall within a predetermined range of value, and a laminating step of laminating the plurality of unit battery cells the effective areas the plurality of unit battery cells being adjusted in the adjusting step.

This makes it possible to manufacture a laminated battery constituted by a plurality of unit battery cells with their respective battery capacities being uniform within a predetermined range of value such as a substantially uniform range, as the respective effective areas of the plurality of unit battery cells, which are proportional to the battery capacities, are adjusted on the basis of the characteristics measured in the measuring step. This results in making it possible to, in a case where the laminated battery to be manufactured is a series-connected laminated battery, inhibit the unit battery cells from being over-charged or over-discharged. Further, in a case where the laminated battery is a parallel-connected laminated battery, variations in current flowing through collecting leads through which a current is extracted from electrodes can be reduced. This makes it possible to reduce local heat generation of the unit battery cells attributed to an excessive rise in temperature or other factors. Therefore, the method for manufacturing a laminated battery according to the present aspect makes it possible to reduce unsafe events such as degradation and heat generation of the unit battery cells, making it possible to manufacture a laminated battery with enhanced reliability.

Further, since the battery capacities cay be adjusted by adjusting the effective areas, the battery capacity of the laminated battery as a whole can be precisely adjusted without varying the thickness of the laminated battery.

Further, for example, in the area adjusting step, the effective areas may be adjusted by cutting each of the plurality of unit battery cells.

This makes it possible to adjust the effective areas simply by adjusting actual areas by cutting. This makes it possible to easily manufacture a laminated battery with enhanced reliability.

Further, for example, in the measuring step, respective charge and discharge characteristics of the plurality of unit battery cells may be measured as the characteristics.

This makes it possible to precisely adjust the respective battery capacities of the plurality of unit battery cells, as the measurement of the charge and discharge characteristics allows quantities of electricity and voltages associated with the battery capacities to be measured.

Further, for example, in the measuring step, the charge and discharge characteristics may be measured in a region lower than or equal to 10% of the battery capacities of the plurality of unit battery cells.

This makes it possible to make the duration of measurement of the charge and discharge characteristics shorter than in a fully charged condition, as the charge and discharge characteristics are measured in some regions of the battery capacities of the unit battery cells. Further, even with the charge and discharge characteristics measured in some regions of the battery capacities, the battery capacities of the unit battery cells can be derived, as the amounts of rise in voltage of the unit battery cells with respect to the quantities of charging electricity at an early stage of charging are correlated with the battery capacities. This makes it possible to manufacture the laminated battery with high producibility. Further, since a small quantity of electricity is charged, only a small amount of current flows even at the occurrence of a short circuit or other failures due to contact between a negative-electrode layer and a positive-electrode layer during the manufacture, so that heat generation or other events are reduced. This makes it possible to enhance the safety with which the laminated battery is manufactured.

Further, for example, a duration of measurement of the charge and discharge characteristics may be shorter than or equal to one minute.

This makes it possible to derive the battery capacities of the unit batter cells even when the duration of measurement of the charge and discharge characteristics is short, as the amounts of rise in voltage of the unit battery cells with respect to the quantities of charging electricity at an early stage of charging are correlated with the battery capacities. This makes it possible to manufacture the laminated battery with high producibility.

Further, for example, in the measuring step, respective impedances of the plurality of unit battery cells may be measured as the characteristics.

This makes it possible to derive the battery capacities of the unit battery cells simply by measuring the impedances of the unit battery cells, as the impedances and battery capacities of the unit battery cells are correlated with each other. This makes it possible to manufacture the laminated battery with high producibility.

Further, for example, in the laminating step, the plurality of unit battery cells may be laminated in such an arrangement that of the plurality of unit battery cells to be laminated, two unit battery cells to be laminated to be located at both ends in a direction of laminating are both smaller in area than a unit battery cell to be laminated to be located between the two unit battery cells.

The laminated battery manufactured by such a manufacturing method is structured such that the outer peripheries in plan view of the unit battery cells located at both ends in the direction of laminating do not project. This inhibits external shock from being concentrated at the outer peripheries in plan view of the unit battery cells. The laminated battery thus manufactured can reduce the risk of damaging the outer peripheries in plan view of the unit battery cells located at both ends in the direction of laminating, although the unit battery cells located at both ends in the direction of laminating are susceptible to external shock.

Further, for example, in the laminating step, only a region where all of the plurality of unit battery cells overlap as seen from an angle parallel with a direction of laminating may be compressed after the plurality of unit battery cells have been laminated.

This makes it possible to, even in a case where the battery capacity and volume energy density of the laminated battery are increased by compressing the laminated battery, avoid compressing a region of low mechanical strength where the plurality of unit battery cells do not overlap. This makes it possible to reduce the risk of damaging a unit battery cell in the manufacture of the laminated battery.

Further, a laminated battery according to an aspect of the present disclosure is a laminated battery in which a plurality of unit battery cells each having a negative-electrode layer, a positive-electrode layer, and a solid electrolyte layer located between the negative-electrode layer and the positive-electrode layer are laminated. Respective areas of the plurality of unit battery cells are not uniform, and of the plurality of unit battery cells, two unit battery cells located at both ends in a direction of laminating are both smaller in area than a unit battery cell located between the two unit battery cells.

This gives a structure in which the outer peripheries in plan view of the unit battery cells located at both ends in the direction of laminating do not project. This inhibits external shock from being concentrated at the outer peripheries in plan view of the unit battery cells. This makes it possible to reduce the risk of damaging the outer peripheries in plan view of the unit battery cells located at both ends in the direction of laminating, although the unit battery cells located at both ends in the direction of laminating are susceptible to external shock. This makes it possible to achieve a laminated battery with enhanced reliability.

Further, for example, respective battery capacities of the plurality of unit battery cells may be uniform.

This makes it possible to, in a case where the laminated battery is a series-connected laminated battery, inhibit the unit battery cells from being over-charged or over-discharged. Further, in a case where the laminated battery is a parallel-connected laminated battery, variations in current flowing through collecting leads through which a current is extracted from electrodes can be reduced. This makes it possible to reduce local heat generation of the unit battery cells attributed to an excessive rise in temperature or other factors. This makes it possible to reduce unsafe events such as degradation and heat generation of the unit battery cells, making it possible to manufacture the laminated battery with further enhanced reliability.

The following describes an embodiment of the present disclosure with reference to the drawings.

It should be noted that the embodiments to be described below each illustrate a comprehensive and specific example. The numerical values, shapes, materials, constituent elements, placement and topology of constituent elements, steps, orders of steps, or other features that are shown in the following embodiments are just a few examples and are not intended to limit the present disclosure. Further, those of the constituent elements in the following embodiments which are not recited in an independent claim are described as optional constituent elements.

Further, the drawings are schematic views, and are not necessarily strict illustrations. Accordingly, for example, the drawings are not necessarily to scale. In the drawings, substantially the same components are given the same reference signs, and a repeated description may be omitted or simplified.

Further, terms such as "parallel" used herein to show the way in which elements are interrelated, terms such as "rectangular" used herein to show the shape of an element, and ranges of numerical values used herein are not expressions that represent only exact meanings but expressions that are meant to also encompass substantially equivalent ranges, e.g. differences of approximately several percent.

Further, in the present specification and drawings, the x axis, the y axis, and the z axis represent the three axes of a three-dimensional orthogonal coordinate system. In each of the embodiments, the z-axis direction is a thickness direction of a battery. Further, a positive direction parallel with the z axis is upward in the z-axis direction, and a negative direction parallel with the z axis is downward in the z-axis direction. Further, the term "thickness direction" used herein means a direction parallel with a direction of laminating of a laminated battery and unit battery cells, i.e. a direction perpendicular to a principal surface of each layer.

Further, the term "plan view" used herein means a case where the laminated battery and the unit battery cells are seen from an angle parallel with the thickness direction.

Further, the "areas" and "effective areas" of the laminated battery and the unit battery cells herein mean the areas and effective areas, respectively, of the laminated battery and the unit battery cells in plan view.

Further, a negative-electrode collector and a positive-electrode collector are sometimes collectively referred to simply as "collectors". Further, a negative-electrode active material layer and a positive-electrode active material layer are sometimes collectively referred to simply as "active material layers".

### (Embodiment)

First, a configuration of a laminated battery according to the present embodiment is described.

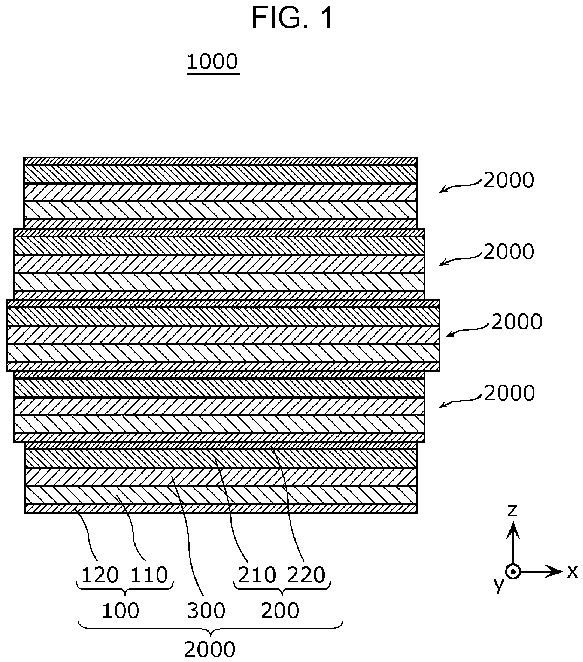

Fig. 1 is a cross-sectional view schematically showing a configuration of a laminated battery 1000 according to the present embodiment.

As shown in Fig. 1, the laminated battery 1000 according to the present embodiment includes a plurality of unit battery cells 2000. Specifically, the laminated battery 1000 has a structure in which the plurality of unit battery cells 2000 are laminated. The plurality of unit battery cells 2000 are electrically connected in series to one another to constitute the laminated battery 1000. The laminated battery 1000 is for example a secondary battery that is capable of being repeatedly charged and discharged. In the illustrated example, five unit battery cells 2000 are laminated. However, the number of unit battery cells 2000 that are laminated is not limited to a particular number. The number of unit battery cells 2000 that are laminated may be larger than or equal to 2 and smaller than or equal to 4 or may be larger than or equal to 6.

Each of the unit battery cells 2000 includes a negative-electrode layer 100, a positive-electrode layer 200, and a solid electrolyte layer 300 located between the negative-electrode layer 100 and the positive-electrode layer 200. The plurality of unit battery cells 2000 are laminated such that their electrodes are facing in the same orientation. That is, in the laminated battery 1000, adjacent unit battery cells 2000 are laminated such that the negative-electrode layer 100 of one of the adjacent unit battery cells 2000 and the positive-electrode layer 200 of the other of the adjacent unit battery cells 2000 are adjacent to each other. This causes the laminated battery 1000 to be a series-connected laminated battery in which the plurality of unit battery cells 2000 are electrically connected in series to one another.

The negative-electrode layer 100 and the positive electrode layer 200 face each other across the solid electrolyte layer 300. In the illustrated example, each of the unit battery cells 2000 includes a pair of negative-electrode and positive-electrode layers 100 and 200 facing each other across a solid electrolyte layer 300. However, this is not intended to impose any limitation. Each of the unit battery cells 2000 may include two or more of at least any of the negative-electrode layer 100, the positive-electrode layer 200, and the solid electrolyte layer 300.

In each of the unit battery cells 2000, the negative-electrode layer 100, the solid electrolyte layer 300, and the positive-electrode layer 200 are laminated in this order along a thickness direction (z-axis direction) of the unit battery cell 2000. More specifically, in each of the unit battery cells 2000, a negative-electrode collector 120, a negative-electrode active material layer 110, the solid electrolyte layer 300, a positive-electrode active material layer 210, and a positive-electrode collector 220 are laminated in this order along the thickness direction of the unit battery cell 2000.

The negative-electrode layer 100 includes the negative-electrode active material layer 110 and the negative-electrode collector 120. The negative-electrode active material layer 110 is located between the solid electrolyte layer 300 and the negative-electrode collector 120. The thickness of the negative-electrode active material layer 110 is for example greater than or equal to 5 µm and less than or equal to 300 µm, but is not limited to these values.

The negative-electrode active material layer 110 contains , for example, a negative-electrode active material as an electrode material. Usable examples of the negative-electrode active material contained in the negative-electrode active material layer 110 include negative-electrode active materials such as graphite and metal lithium. As a material of the negative-electrode active material, any of various materials from and into which ions such as lithium (Li) or magnesium (Mg) ions can be desorbed or inserted may be used.

Further, usable examples of the material contained in the negative-electrode active material layer 110 include solid electrolytes such as inorganic solid electrolytes. Usable examples of inorganic solid electrolytes include sulfide solid electrolytes or oxide solid electrolytes. Usable examples of sulfide solid electrolytes include a mixture of lithium sulfide (Li₂S) and phosphorus pentasulfide (P₂S₅). Further, usable examples of the material contained in the negative-electrode active material layer 110 include conductive agents such as acetylene black, carbon black, graphite, and carbon fiber or binding binders such as polyvinylidene fluoride.

The negative-electrode collector 120 is in contact with the negative-electrode active material layer 110. The thickness of the negative-electrode collector 120 is for example greater than or equal to 5 µm and less than or equal to 100 µm, but is not limited to these values. The negative-electrode collector 120 is a member having electrical conductivity. The negative-electrode collector 120 may for example be a thin film having electrical conductivity. Usable examples of a material that constitutes the negative-electrode collector 120 include metals such as stainless steel (SUS), aluminum (Al), copper (Cu), and nickel (Ni). Specifically, usable examples of the negative-electrode collector 120 include metallic foil such as SUS foil, Cu foil, and Ni foil.

Another layer such as a joining layer constituted by an conductive material may be provided between the negative-electrode active material layer 110 and the negative-electrode collector 120. Further, the negative-electrode layer 100 does not need to include the negative-electrode collector 120, and for example, collectors of adj acent unit battery cells 2000, an extraction electrode, a substrate that supports the laminated battery 1000, or other components may function as a collector of the negative-electrode active material layer 110. That is, the negative-electrode layer 100 may include only the negative-electrode active material layer 110 out of the negative-electrode active material layer 110 and the negative-electrode collector 120.

The positive-electrode layer 200 includes the positive-electrode active material layer 210 and the positive-electrode collector 220. The positive-electrode active material layer 210 is located between the solid electrolyte layer 300 and the positive-electrode collector 220. The thickness of the positive-electrode active material layer 210 is for example greater than or equal to 5 µm and less than or equal to 300 µm, but is not limited to these values.

The positive-electrode active material layer 210 contains , for example, a positive-electrode active material as an electrode material. The positive-electrode active material is a material that constitutes the extreme opposite of the negative-electrode active material.

Usable examples of the positive-electrode active material contained in the positive-electrode active material layer 210 include positive-electrode active materials such as a lithium cobalt oxide complex oxide (LCO), a lithium nickel oxide complex oxide (LNO), a lithium manganese oxide complex oxide (LMO), a lithium-manganese-nickel complex oxide (LMNO), a lithium-manganese-cobalt complex oxide (LMCO), a lithium-nickel-cobalt complex oxide (LNCO), and a lithium-nickel-manganese-cobalt complex oxide (LNMCO).

As a material of the positive-electrode active material, any of various materials from and into which ions such as Li or Mg ions can be desorbed or inserted may be used.

Further, usable examples of the material contained in the positive-electrode active material layer 210 include solid electrolytes such as inorganic solid electrolytes. Usable examples of inorganic solid electrolytes include sulfide solid electrolytes or oxide solid electrolytes. Usable examples of sulfide solid electrolytes include a mixture of lithium sulfide (Li₂S) and phosphorus pentasulfide (P₂S₅). The positive-electrode active material may have its surface coated with a solid electrolyte. Further, usable examples of the material contained in the positive-electrode active material layer 210 include conductive agents such as acetylene black, carbon black, graphite, and carbon fiber or binding binders such as polyvinylidene fluoride.

The positive-electrode collector 220 is in contact with the positive-electrode active material layer 210. The thickness of the positive-electrode collector 220 is for example greater than or equal to 5 µm and less than or equal to 100 µm, but is not limited to these values. The positive-electrode collector 220 is a member having electrical conductivity. The positive-electrode collector 220 may for example be a thin film having electrical conductivity. Usable examples of a material that constitutes the positive-electrode collector 220 include metals such as stainless steel (SUS), aluminum (Al), copper (Cu), and nickel (Ni). Specifically, usable examples of the positive-electrode collector 220 include metallic foil such as SUS foil, Cu foil, and Ni foil.

Another layer such as a joining layer constituted by an conductive material may be provided between the positive-electrode active material layer 210 and the positive-electrode collector 220. Further, the positive-electrode layer 200 does not need to include the positive-electrode collector 220, and for example, collectors of adj acent unit battery cells 2000, an extraction electrode, a substrate that supports the laminated battery 1000, or other components may function as a collector of the positive-electrode active material layer 210. That is, the positive-electrode layer 200 may include only the positive-electrode active material layer 210 out of the positive-electrode active material layer 210 and the positive-electrode collector 220.

The solid electrolyte layer 300 is disposed between the negative-electrode active material layer 110 and the positive-electrode active material layer 210. The solid electrode layer 300 is in contact with each of the negative-electrode and positive-electrode active material layers 110 and 210. The thickness of the solid electrolyte layer 300 may be greater than or equal to 5 µm and less than or equal to 300 µm or may be greater than or equal to 5 µm and less than or equal to 100 µm.

In the present embodiment, the negative-electrode active material layer 110, the positive-electrode active material layer 210, and the solid electrolyte layer 300 are maintained in a parallel plate state. This makes it possible to reduce the occurrence of breaks or collapses due to curving. The negative-electrode active material layer 110, the positive-electrode active material layer 210, and the solid electrolyte layer 300 may be smoothly curved in combination.

The solid electrolyte layer 300 is a layer containing an electrolyte material. As the electrolyte material, a generally known common electrolyte for use in a battery may be used. The solid electrolyte layer 300 contains a solid electrolyte as an electrolyte. The unit battery cells 2000 may for example be all-solid batteries.

Usable examples of the solid electrolyte include solid electrolytes such as inorganic solid electrolytes. Usable examples of inorganic solid electrolytes include sulfide solid electrolytes or oxide solid electrolytes. Usable examples of sulfide solid electrolytes include a mixture of lithium sulfide (Li₂S) and phosphorus pentasulfide (P₂S₅). The solid electrolyte layer 300 may contain a binding binder such as polyvinylidene fluoride in addition to the electrolyte material.

As shown in Fig. 1, the respective areas of the plurality of unit battery cells 2000 of the laminated battery 1000 are not uniform. Further, the respective areas of the plurality of unit battery cells 2000 of the laminated battery 1000 are adjusted so that the respective battery capacities of the plurality of unit battery cells 2000 become uniform. A method for adjusting the areas to make the battery capacities uniform will be described later. It should be noted that being uniform in battery capacities means being substantially uniform in battery capacity. For example, the difference in battery capacity between each of the plurality of unit battery cells 2000 and the other may be less than or equal to 5%, may be less than or equal to 3%, or may be less than or equal to 1%.

In the laminated battery 1000, a current of the same magnitude flows through each of the plurality of unit battery cells 2000 electrically connected in series to one another. Therefore, in a case where there are variations in the battery capacity of the plurality of unit battery cells 2000, the unit battery cells 2000 become over-charged and over-discharged. On the other hand, in the laminated battery 1000 according to the present embodiment, the respective battery capacities of the plurality of unit battery cells 2000 are uniform. This makes it possible in the laminated battery 1000 to inhibit the unit battery cells 2000, for example, from being over-charged or over-discharged. This results in making it possible to reduce unsafe events such as degradation and heat generation of the unit battery cells 2000. This brings about enhancement in reliability of the laminated battery 1000.

Further, as shown in Fig. 1, the laminated battery 1000 may be configured such that unit battery cells 2000 having larger areas are disposed closer to the center in the direction of laminating and unit battery cells 2000 having smaller areas are disposed closer to both ends in the direction of laminating. For example, the respective areas of the plurality of unit battery cells 2000 are not uniform, and of the plurality of unit battery cells 2000, two unit battery cells 2000 located at both ends in the direction of laminating are smaller in area than a unit battery cell 2000 located between the two unit battery cells 2000. This gives a structure in which the outer peripheries in plan view of the unit battery cells 2000 located at both ends in the direction of laminating do not project. This inhibits external shock from being concentrated at the outer peripheries in plan view of the unit battery cells 2000. This makes it possible to reduce the risk of damaging the outer peripheries in plan view of the unit battery cells 2000 located at both ends in the direction of laminating, although the unit battery cells 2000 located at both ends in the direction of laminating are susceptible to external shock.

Further, in the example shown in Fig. 1, of adj acent ones of the plurality of unit battery cells 2000, one unit battery cell 2000 located closer to an end in the direction of laminating is smaller in area than or equal in area to the other unit battery cell 2000. This causes the area of a unit battery cell 2000 located closer to an end in the direction of laminating to be smaller than the area of a unit battery cell 2000 located closer to the center in the direction of laminating, making it hard to give a structure in which the outer periphery in plan view of each of the unit battery cells 2000 projects. This makes it hard for external shock to be concentrated at the outer peripheries in plan view of the unit battery cells 2000, making it possible to reduce the risk of damaging the outer periphery in plan view of each of the plurality of unit battery cells 2000.

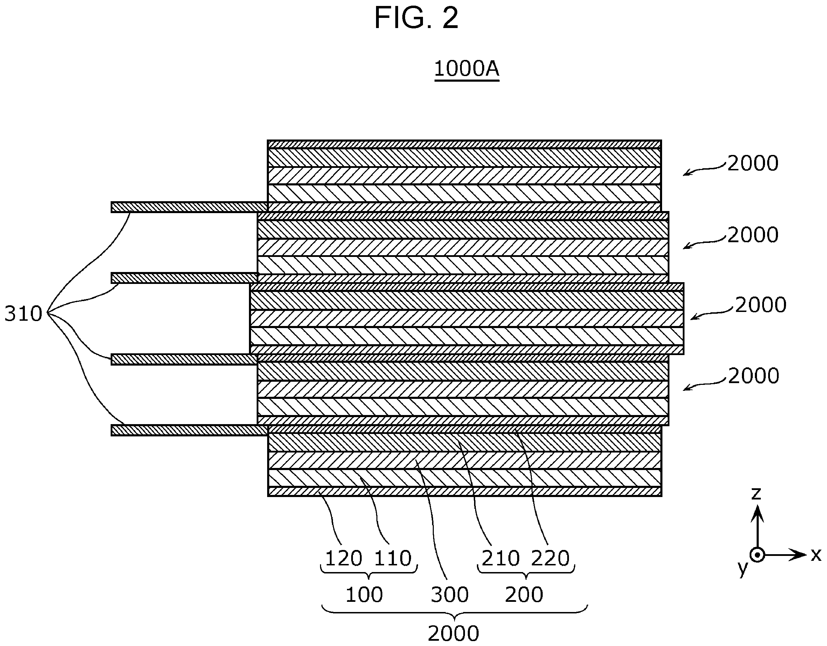

Further, the laminated battery 1000 may include intermediate electrode leads by using differences in area among the unit battery cells 2000. Fig. 2 is a cross-sectional view schematically showing a configuration of a laminated battery 1000A including intermediate electrode leads 310 according to the present embodiment. As shown in Fig. 2, the laminated battery 1000A includes the intermediate electrode leads 310 in addition to the components of the aforementioned laminated battery 1000. The intermediate electrode leads 310 are joined to ends of the unit battery cells 2000 in a direction perpendicular to the direction of laminating, specifically side surfaces of collectors of the unit battery cells 2000. Further, the intermediate electrode leads 310 are also joined to the collectors in a region where adjacent unit battery cells 2000 do not overlap each other in plan view. This makes it possible to increase the joint strength of the intermediate electrode leads 310. Further, a space in the laminated battery 1000A located above or below the region where adjacent unit battery cells 2000 do not overlap each other in plan view can be efficiently used, so that the volume energy density of the laminated battery 1000A can be increased. Usable examples of a material that constitutes the intermediate electrode leads 310 include metals such as nickel, stainless steel, aluminum, and copper.

The intermediate electrode leads 310 can be used, for example, for monitoring the respective voltages of the unit battery cells 2000 of the laminated battery 1000A. This makes it possible to grasp the operating conditions of the unit battery cells 2000 and to bring about improvement in safety by control of the laminated battery 1000 with the intermediate electrode leads 310.

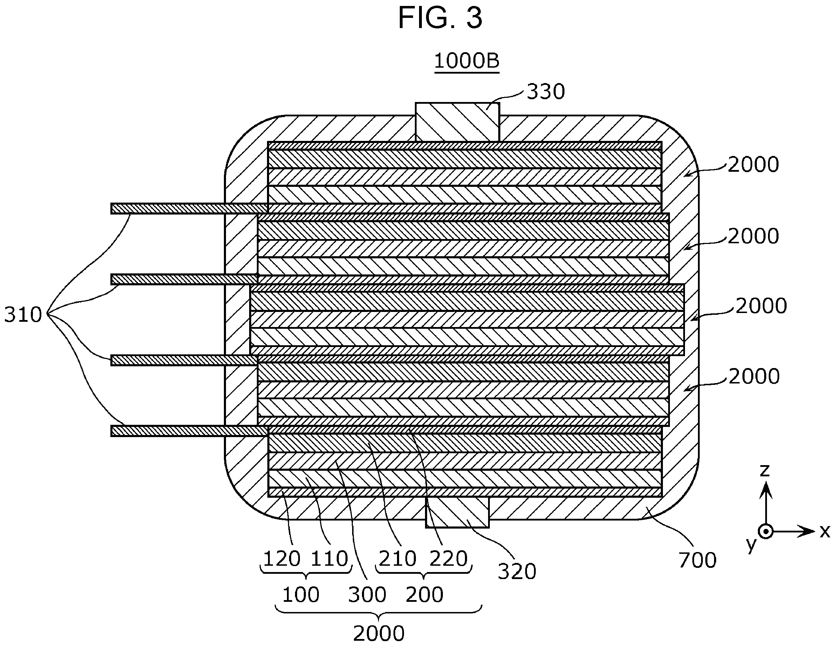

Further, the laminated battery according to the present embodiment may further include a sealing member. Fig. 3 is a cross-sectional view schematically showing a configuration of a laminated battery 1000B including a sealing member 700 according to the present embodiment. As shown in Fig. 3, the laminated battery 1000B includes the sealing member 700, a negative-electrode collecting lead 320, and a positive-electrode collecting lead 330 in addition to the components of the aforementioned laminated battery 1000A. It should be noted that the laminated battery 1000B does not need to include the intermediate electrode leads 310.

The negative-electrode collecting lead 320 and the positive-electrode collecting lead 330 are terminals, connected to the negative-electrode and positive-electrode collectors 120 and 220 of unit battery cells 2000 at both ends in the direction of laminating, respectively, through which a current is extracted from the laminated battery 1000B. Usable examples of a material that constitutes the negative-electrode collecting lead 320 and the positive-electrode collecting lead 330 include metals such as nickel, stainless steel, aluminum, and copper.

The sealing member 700 is disposed to cover all of the plurality of unit battery cells 2000 laminated. Parts of the intermediate electrode leads 310, the negative-electrode collecting lead 320, and the positive-electrode collecting lead 330 are exposed without being covered with the sealing member 700. The sealing member 700 is made, for example, of an electrical insulating material.

The disposition of the sealing member 700 makes it possible to solidly protect the central unit battery cell 2000, which projects in an isolated manner from ends of the laminated battery 1000B, bringing about improvement in reliability of the laminated battery 1000B against mechanical shock or other shocks. Further, the nonuniformity in the area of the unit battery cells 2000 of the laminated battery 1000B brings about improvement in joint strength between the sealing member 700 and each of the unit battery cells 2000, bringing about further improvement in reliability of the laminated battery 1000B.

For example, the sealing member 700 is a member containing a first material. The sealing member 700 may for example be a member containing the first material as a major ingredient. The sealing member 700 may for example be a member composed solely of the first material.

Usable examples of the first material include generally known common battery sealing member materials such as sealants. Usable examples of the first material include resin materials. The first material may be an insulating material having no ion conductivity. For example, the first material may be at least one type of epoxy resin, acrylic resin, polyimide resin, and silsesquioxane.

The sealing member 700 may contain a particulate metal oxide material. Usable examples of the metal oxide material include silicon oxide, aluminum oxide, titanium oxide, zinc oxide, cerium oxide, ferric oxide, tungsten oxide, zirconium oxide, calcium oxide, zeolite, and glass. For example, the sealing member 700 may be made of a resin material containing a dispersion of a plurality of particles made of a metal oxide material.

The disposition of the sealing member 700 makes it possible to improve the reliability of the laminated battery 1000B in various respects such as mechanical strength, short-circuit prevention, and moisture prevention.

### [Modification]

Next, a modification of the embodiment is described. The following description gives a description with a focus on differences from the foregoing embodiment and omits or simplifies a description of common features as appropriate.

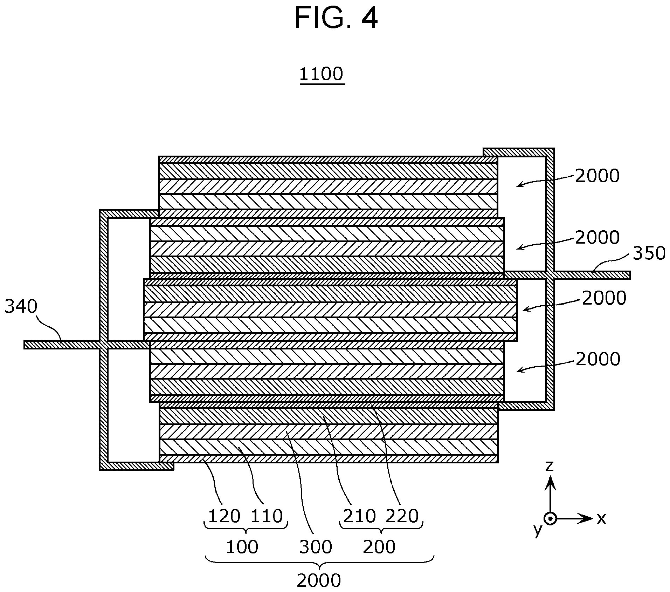

Fig. 4 is a cross-sectional view schematically showing a configuration of a laminated battery 1100 according to the present modification. The laminated battery 1100 differs from the laminated battery 1000 according to the embodiment in that a plurality of unit battery cells 2000 are electrically connected in parallel to one another.

As shown in Fig. 4, the laminated battery 1100 according to the present modification includes the plurality of unit battery cells 2000. Specifically, the laminated battery 1100 has a structure in which the plurality of unit battery cells 2000 are laminated. The plurality of unit battery cells 2000 are electrically connected in parallel to one another to constitute the laminated battery 1100. Further, the laminated battery 1100 includes a negative-electrode collecting lead 340 and a positive-electrode collecting lead 350.

Adjacent ones of the plurality of unit battery cells 2000 are laminated with their electrodes in inverted orientation. That is, in the laminated battery 1100, the plurality of unit battery cells 2000 are laminated such that the negative-electrode or positive-electrode layers 100 or 200 of two adjacent unit battery cells 2000 are adjacent to each other. This causes the laminated battery 1100 to be a parallel-connected laminated battery in which the plurality of unit battery cells 2000 are electrically connected in parallel to one another.

In each of the unit battery cells 2000, the negative-electrode layer 100, the solid electrolyte layer 300, and the positive-electrode layer 200 are alternately laminated in this or der or reverse order along a thickness direction (z-axis direction) of the unit battery cell 2000.

The negative-electrode collecting lead 340 and the positive-electrode collecting lead 350 are conducting wires that are used for charge and discharge, inter-terminal voltage monitoring, or other purposes. The negative-electrode collecting lead 340 is electrically connected to the negative-electrode collector 120 of the negative-electrode layer 100 of each of the plurality of unit battery cells 2000. The positive-electrode collecting lead 350 is electrically connected to the positive-electrode collector 220 of the positive-electrode layer 200 of each of the plurality of unit battery cells 2000.

Further, the differences in area among the unit battery cells 2000 are used to cause the negative-electrode collecting lead 340 and the positive-electrode collecting lead 350 to be formed by joining or other processes at ends of the unit battery cells 2000 in a direction perpendicular to the direction of laminating. The negative-electrode collecting lead 340 and the positive-electrode collecting lead 350 are joined to ends of the unit battery cells 2000 in a direction perpendicular to the direction of laminating, specifically side surfaces of the negative-electrode and positive-electrode collectors 120 and 220 of the unit battery cells 2000. Further, the negative-electrode collecting lead 340 and the positive-electrode collecting lead 350 are also joined to the negative-electrode and positive-electrode collectors 120 and 220 in a region where adjacent unit battery cells 2000 do not overlap each other in plan view. This makes it possible to increase the joint strength of the negative-electrode collecting lead 340 and the positive-electrode collecting lead 350. Further, a space in the laminated battery 1100 located above or below the region where adjacent unit battery cells 2000 do not overlap each other in plan view can be efficiently used, so that the volume energy density of the laminated battery 1100 can be increased.

As shown in Fig. 4, the respective areas of the plurality of unit battery cells 2000 of the laminated battery 1100 are not uniform, as in the case of the laminated battery 1000. Further, the respective areas of the plurality of unit battery cells 2000 of the laminated battery 1100 are adjusted so that the respective battery capacities of the plurality of unit battery cells 2000 become uniform. The method for adjusting the areas to make the battery capacities uniform will be described later.

In the laminated battery 1100, each of the plurality of unit battery cells 2000 electrically connected in parallel to one another is at the same voltage as the other. Therefore, in a case where there are variations in the batter y capacity of the plurality of unit battery cells 2000, there are great variations in current flowing through the negative-electrode collecting lead 340 and the positive-electrode collecting lead 350. On the other hand, in the laminated battery 1100 according to the present modification, the respective battery capacities of the plurality of unit battery cells 2000 are uniform. This makes it possible in the laminated battery 1100 to reduce the variations in current flowing through the negative-electrode collecting lead 340 and the positive-electrode collecting lead 350. This results in making it possible to prevent an excessive rise in temperature or other events, thus making it possible to reduce local heat generation of the unit battery cells 2000 and bringing about enhancement in reliability of the laminated battery 1100.

Further, as shown in Fig. 4, the laminated battery 1100 too may be configured such that unit battery cells 2000 having larger areas are disposed closer to the center in the direction of laminating and unit battery cells 2000 having smaller areas are disposed closer to both ends in the direction of laminating, as in the case of the laminated battery 1000. This makes it possible to reduce the risk of damaging the outer peripheries in plan view of the of unit battery cells 2000 located at both ends in the direction of laminating.

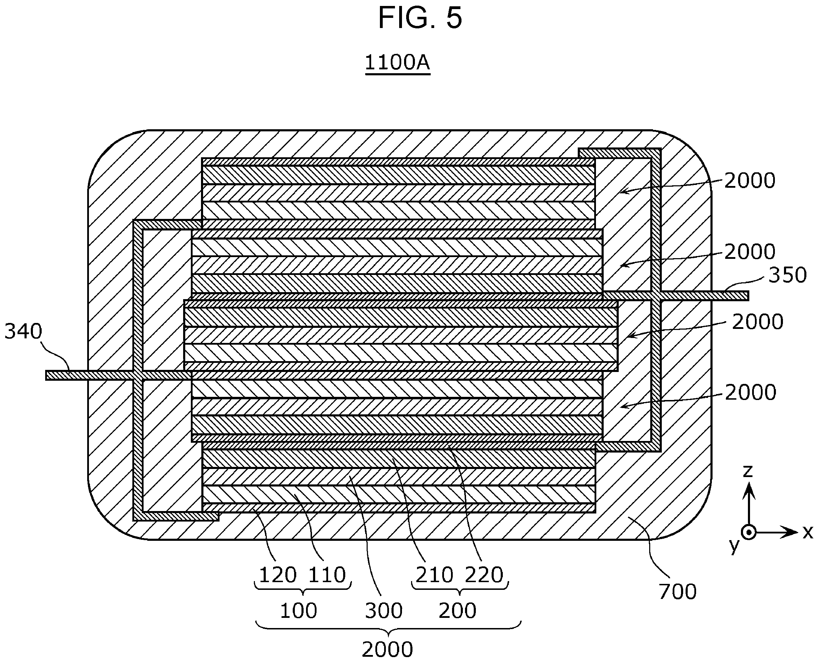

Further, the laminated battery according to the present modification may further include a sealing member. Fig. 5 is a cross-sectional view schematically showing a configuration of a laminated battery 1100A including a sealing member 700 according to the present modification. As shown in Fig. 5, the laminated battery 1100A includes the sealing member 700 in addition to the components of the aforementioned laminated battery 1100.

The sealing member 700 is disposed to cover all of the plurality of unit battery cells 2000 laminated. Parts of the negative-electrode collecting lead 340 and the positive-electrode collecting lead 350 are exposed without being covered with the sealing member 700.

As in the case of the aforementioned laminated battery 1000B, the disposition of the sealing member 700 makes it possible to solidly protect the central unit battery cell 2000, which projects in an isolated manner from ends of the laminated battery 1100A, bringing about improvement in reliability of the laminated battery 1100A against mechanical shock or other shocks. Further, the nonuniformity in the area of the unit battery cells 2000 of the laminated battery 1100A brings about improvement in joint strength between the sealing member 700 and each of the unit battery cells 2000, bringing about further improvement in reliability of the laminated battery 1100A.

### [Method for Manufacturing Laminated Battery]

Next, a method for manufacturing a laminated battery according to the present embodiment is described. Although the following mainly describes a method for manufacturing a laminated battery 1000, a laminated battery 1100 too can be manufactured in a similar manner.

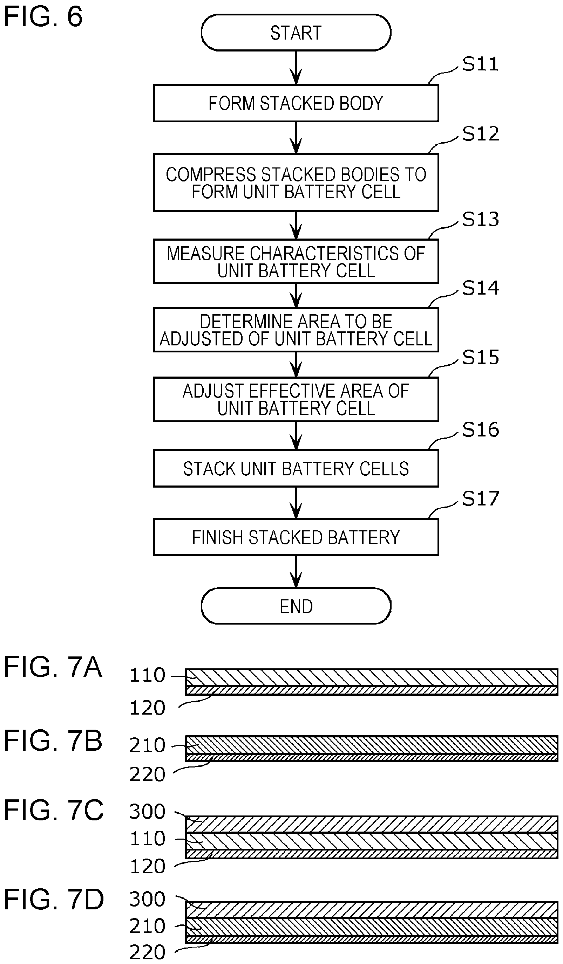

The method for manufacturing a laminated battery according to the present embodiment includes a laminated body forming step, a compressing step, a measuring step, an area adjusting step, and a laminating step. The following describes each of the steps in detail. Fig. 6 is a flow chart for explaining the method for manufacturing a laminated battery according to the present embodiment. It should be noted that the manufacturing method in the following description of the steps is just an example and is not limited to the following method.

### (1) Laminated Body Forming Step

First, the laminated body forming step is described. In the method for manufacturing a laminated battery according to the present embodiment, the laminated body forming step is executed first. In the laminated body forming step, layers of material that constitute a unit battery cell 2000 are laminated to form a laminated body (step S11 of Fig. 6).

Figs. 7A to 7H are cross-sectional views each showing an example of a laminated configuration of a laminated body formed in the laminated body forming step. In the laminated body forming step, for example, as shown in Figs. 7A and 7B, a laminated body in which a negative-electrode active material layer 110 is laminated on top of a negative-electrode collector 120 and a laminated body in which a positive-electrode active material layer 210 is laminated on top of a positive-electrode collector 220 are formed.

Further, as shown in Figs. 7C and 7D, a laminated body in which a solid electrolyte layer 300 is laminated on top of the negative-electrode active material layer 110 of the laminated body shown in Fig. 7A and a laminated body in which a solid electrolyte layer 300 is laminated on top of the positive-electrode active material layer 210 of the laminated body shown in Fig. 7B may be formed.

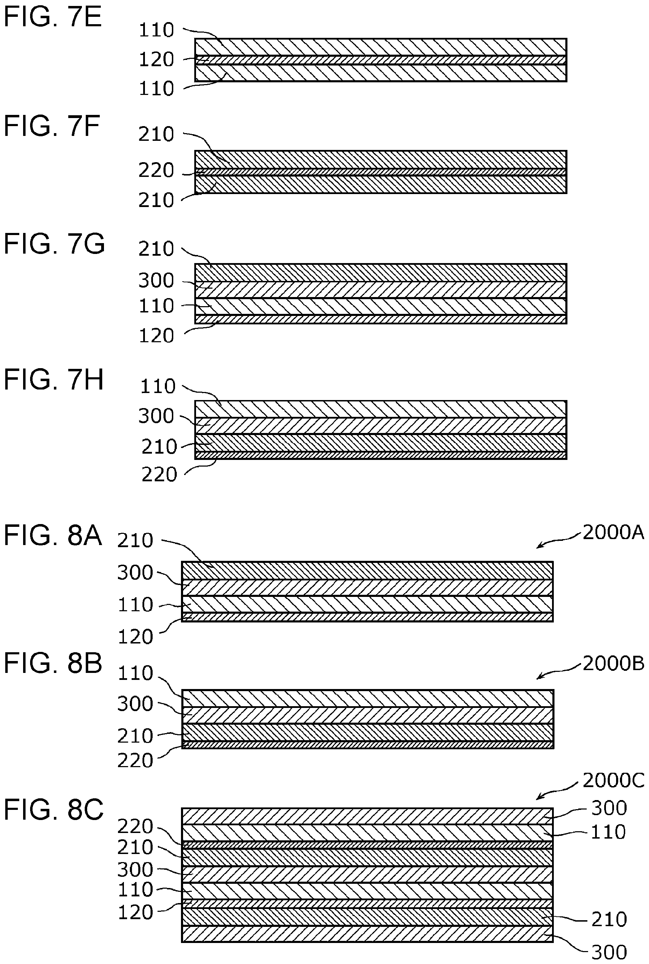

Further, as shown in Figs. 7E and 7F, a laminated body in which negative-electrode active material layers 110 are laminated on both sides of a negative-electrode collector 120 and a laminated body in which positive-electrode active material layers 210 are laminated on both sides of a positive-electrode collector 220 may be formed.

Further, as shown in Fig. 7G, a laminated body in which a positive-electrode active material layer 210 is laminated on top of the solid electrolyte layer 300 of the laminated body shown in Fig. 7C may be formed. Further, as shown in Fig. 7H, a laminated body in which a negative-electrode active material layer 110 is laminated on top of the solid electrolyte layer 300 of the laminated body shown in Fig. 7D may be formed. It should be noted that the laminated bodies shown in Figs. 7A to 7H are just a few examples and the laminated configuration of a laminated body is not limited to the examples shown in Figs. 7A to 7H. For example, a laminated body may be identical in laminated configuration to a unit battery cell 2000.

The aforementioned laminated bodies may each be formed, for example, by coating a collector or a surface of each layer with a paste of paint containing a mixture of the respective materials of the negative-electrode active material layer 110, the positive-electrode active material layer 210, and the solid electrolyte layer 300 and a solvent and drying the paste of paint. Further, the laminated bodies thus formed may be compressed in the direction of laminating.

The compression is not limited to particular methods. Plate pressing, roller pressing, pneumatic or gas-pressure bag pressing, hydrostatic pressing, or other various methods may be applied.

### (2) Compressing Step

Next, the compressing step is described. In the compressing step, laminated bodies formed in the laminated body forming step are combined on an as-needed basis and compressed to form a unit battery cell 2000 (step S12 of Fig. 6).

In the compressing step, for example, at least two of the laminated bodies shown in Figs. 7A to 7H are laminated such that the negative-electrode active material layer 110 and the positive-electrode active material layer 210 face each other across the solid electrolyte layer 300. In so doing, the at least two laminated bodies are laminated with any of the negative-electrode active material layer 110, the solid electrolyte layer 300, and the positive-electrode active material layer 210 and any of the negative-electrode active material layer 110, the solid electrolyte layer 300, and the positive-electrode active material layer 210 facing each other, and the laminated bodies are joined to each other by compressing them in the direction of laminating. Further, in a case where the laminated bodies include all layers of a unit battery cell 2000, the laminated bodies may be compressed in the direction of laminating without being combined with each other. In this way, for example, a unit battery cell 2000 is formed.

It should be noted that the laminated configuration of a laminated battery cell that is formed in the compressing step is not limited to the laminated configuration of a unit battery cell 2000. Figs. 8A to 8C are cross-sectional views each showing an example of a laminated configuration of a unit battery cell formed in the compressing step according to the embodiment. As shown in Figs. 8A and 8B, in a case where the laminated bodies shown in Figs. 7G and 7H are used, the laminated bodies may be compressed in the direction of laminating without being combined with another particular laminated body to form a unit battery cell 2000A or 2000B constituted by a negative-electrode active material layer 110, a solid electrolyte layer 300, and either a positive-electrode active material layer 210 and a negative-electrode collector 120 or a positive-electrode active material layer 210 and a positive-electrode collector 220. Further, as shown in Fig. 8C, a unit battery cell 2000C configured such that active material layers are laminated on both sides of each of two collectors and solid electrolyte layers 300 are laminated on sides of the active material layers opposite to the collectors may be formed. Further, either of the solid electrolyte layers 300 located at both ends of the unit battery cell 2000C in the direction of laminating does not need to be laminated. Further, the unit battery cells shown in Figs. 8A to 8C are just a few example, and the laminated configuration of a unit battery cell is not limited to the examples shown in Figs. 8A to 8C.

The compression in the compressing step is not limited to particular methods. Plate pressing, roller pressing, pneumatic or gas-pressure bag pressing, hydrostatic pressing, or other various methods may be applied.

In the laminated body forming step and the compressing step, for example, as many unit battery cells 2000 as needed for the laminated battery 1000 are formed. Further, for example, a plurality of unit battery cells 2000 designed to be identical in material and shape to one another are formed.

In the present embodiment, there is no particular limit on how a unit battery cell 2000 is formed, provided a unit battery cell 2000 that constitutes a laminated battery is formed. A unit battery cell 2000 may be formed by a step other than the aforementioned two steps.

### (3) Measuring Step

Next, the measuring step is described. In the measuring step, the respective characteristics of the plurality of unit battery cells 2000 formed in the compressing step are measured (step S13 of Fig. 6). Specifically, in the measuring step, characteristics for deriving the respective battery capacities of the plurality of unit battery cells 2000 are measured. That is, the respective battery capacities of the plurality of unit battery cells 2000 are derived on the basis of the respective characteristics of the plurality of unit battery cells 2000 measured. The battery capacities are quantities of electricity in a fully charged condition.

In the measuring step, for example, the electrical characteristics of electrical behavior such as charge and discharge characteristics are measured as the characteristics. Further, in the measuring step, the mechanical characteristics of, for example, mechanical behavior during compression may be measured as the characteristics. For example, as the electrical characteristics, the battery capacities of the unit battery cells 2000 may be directly derived by measuring the charge and discharge characteristics in a fully charged condition, or the battery capacities of the unit battery cells 2000 may be derived by measuring electrical or mechanical characteristics correlated with the battery capacities and estimating the battery capacities.

The measurement of the electrical characteristics of electrical behavior can involve the use of, for example, impedance measurement, charge and discharge characteristics measurement, or other measurements. That is, in the measuring step, the respective impedances or charge and discharge characteristics of the plurality of unit battery cells 2000 may be measured as the characteristics.

In the impedance measurement, the impedance of a unit battery cell 2000 having a higher battery capacity tends to be lower. Further, progress in compression joining of a unit battery cell 2000 leads to an increase in battery capacity of the unit battery cell 2000 and leads to a decrease in impedance of the unit battery cell 2000. This is used to estimate the battery capacity of a unit battery cell 2000 by measuring the impedance.

For example, a plurality of test unit battery cells of different battery capacities are prepared by preparing a plurality of test unit battery cells of different degrees of progress in compression joining. As the test unit battery cells, unit battery cells that are identical in material and laminated configuration to unit battery cells that constitute a laminated battery to be manufactured are prepared. Then, a correlation between battery capacity and impedance is acquired by measuring the battery capacity and impedance of each of the plurality of test unit battery cells thus prepared. This makes it possible to, by measuring the impedances of the unit battery cells 2000 in the measuring step, estimate the degrees of progress in compression joining and battery capacities of the unit battery cells 2000 from the impedances thus measured and the correlation thus acquired and derive the battery capacities of the unit battery cells 2000. This makes it possible to manufacture the laminated battery 1000 with high producibility, as the battery capacities of the unit battery cells 2000 can be derived simply by measuring the impedances of the unit battery cells 2000.

It should be noted that the aforementioned method is not the only method for preparing test unit battery cells of different battery capacities. For example, a plurality of test unit battery cells of different battery capacities may be prepared by preparing a plurality of unit battery cells made of the same material with varying areas or thicknesses.

In the measurement of the charge and discharge characteristics, the battery capacities are derived from the quantities of charging and discharging electricity, for example, by measuring the charge and discharge characteristics with the unit battery cells 2000 fully charged.

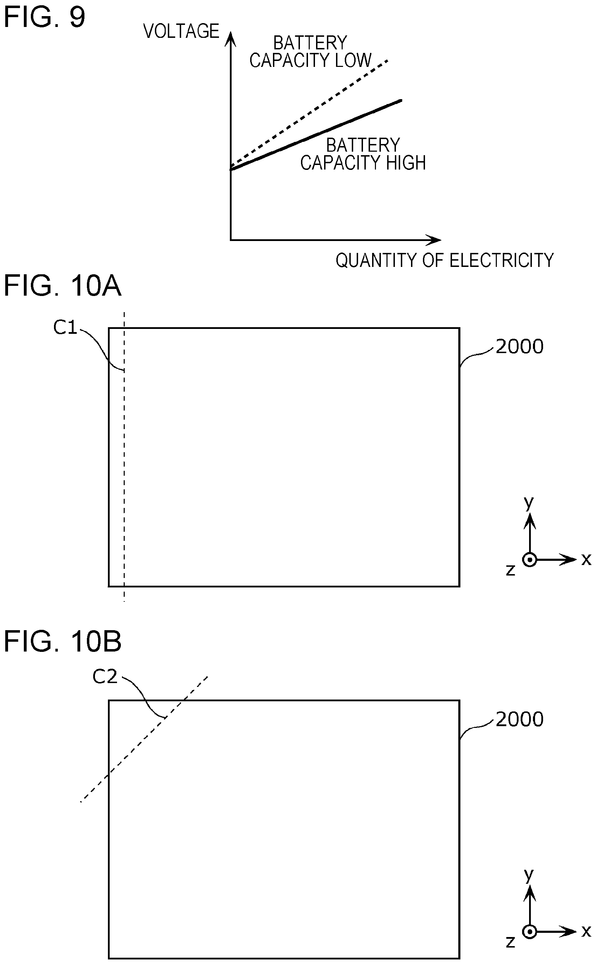

Further, the charge and discharge characteristics may be measured by measuring the rising characteristics of voltage of the unit battery cells 2000 with respect to the quantities of charging electricity at an early stage of charging where the unit battery cells 2000 are charged with a constant current (i.e. at a constant charge and discharge rate). In such measurement too, the battery capacities can be estimated. Fig. 9 is a schematic view showing a relationship between quantity of charging electricity and voltage at an early stage of charging of a unit battery cell 2000. Fig. 9 shows the voltage (vertical axis) and the quantity of charging electricity (horizontal axis) in a case where the unit battery cell 2000 is charged with a constant current. In Fig. 9, the dotted line indicates a case where the battery capacity of the unit battery cell 2000 is relatively low, and the solid line indicates a case where the battery capacity of the unit battery cell 2000 is relatively high. As shown in Fig. 9, in a case where the battery capacity of the unit battery cell 2000 is low, the rise in voltage at the early stage of charging is large, and in a case where the battery capacity of the unit battery cell 2000 is high, the rise in voltage at the early stage of charging is small. That is, in the case of unit battery cells 2000 that are similar or identical in material and shape, a unit battery cell 2000 with a larger rise in voltage per unit time in a short time of approximately several seconds to several minutes after an early stage of charging where the unit battery cell 2000 is charged with a constant current exhibits a correlation with a lower battery capacity in a fully charged condition. This is used to estimate the battery capacity of a unit battery cell 2000 through the short-time charge and discharge characteristics measurement.

For example, as in the case of the aforementioned impedance measurement, a plurality of test unit battery cells of different battery capacities are prepared. Then, a correlation between battery capacity and amount of short-time rise in voltage per unit time is acquired by measuring the battery capacity and amount of short-time rise in voltage per unit time of each of the plurality of test unit battery cells thus prepared. This makes it possible to, by measuring the short-time charge and discharge characteristics of the unit battery cells 2000, estimate the degrees of progress in compression joining and battery capacities of the unit battery cells 2000 from the amounts of rise in per unit time thus measured and the correlation thus acquired and derive the battery capacities of the unit battery cells 2000. This makes it possible to predict the battery capacities of the unit battery cells 2000 even in a short time, thus allowing a rapid shift to a next step in manufacturing a laminated battery. This makes it possible to manufacture the laminated battery 1000 with high producibility. Further, since a small quantity of electricity is charged, only a small amount of current flows even at the occurrence of a short circuit or other failures due to contact between a negative-electrode layer 100 and a positive-electrode layer 200 during the manufacture, so that heat generation or other events are reduced. This makes it possible to enhance the safety with which the laminated battery 1000 is manufactured.

Further, in the acquisition of a correlation between battery capacity and amount of short-time rise in voltage per unit time, correlations at different charge and discharge rates may be acquired by measuring the charge and discharge characteristics of a plurality of test unit battery cells under a plurality of conditions with different charge and discharge rates (i.e. amounts of current during charging and discharging). From among the charge and discharge rates thus measured, a charge and discharge rate most suitable for the measurement of the charge and discharge characteristics may be chosen from the point of view of correlativity, the duration of measurement, or other conditions. Further, for higher accuracy of estimate of the battery capacities of the unit battery cells 2000, the charge and discharge characteristics of the unit battery cells 2000 may be measured at a plurality of charge and discharge rates.

In the short-time charge and discharge characteristics measurement, for example, the charge and discharge characteristics are measured in a region lower than or equal to 10% of the battery capacities of the plurality of unit battery cells 2000. From the point of view of carrying out a measurement in a shorter time, the charge and discharge characteristics may be measured in a region lower than or equal to 5%, 2%, or 1% of the battery capacities of the plurality of unit battery cells 2000. Further, from the point of view of being able to manufacture the laminated battery 1000 with high producibility, the duration of measurement of the charge and discharge characteristics is for example shorter than or equal to one minute. Further, from the point of view of being able to manufacture the laminated battery 1000 with higher producibility, the duration of measurement of the charge and discharge characteristics may be shorter than or equal to thirty seconds, shorter than or equal to ten seconds, or shorter than or equal to three seconds.

Further, in the short-time charge and discharge characteristics measurement, a discharge may be made after the amount of rise in voltage at the early stage of charging has been checked. Further, in a case where the charge and discharge characteristics are measured in a short time, it is possible to proceed to a next manufacturing step without making a discharge, as only a small amount of current flows even if no discharge is made after charging. Further, in a case where a discharge is made, the amount of drop in voltage due to the discharge may be checked.

Examples of the measurement of the mechanical characteristics include the measurement of mechanical deformation amounts, densities, hardness, or other characteristics. As mentioned above, progress in compression joining of a unit battery cell 2000 leads to an increase in battery capacity of the unit battery cell 2000. Therefore, the battery capacities of the unit battery cells 2000 can be estimated by measuring mechanical deformation amounts, densities, hardness, or other characteristics as mechanical characteristics that make it possible to check the degrees of progress in compression joining of the unit battery cells 2000. For example, increases in mechanical deformation amount, density, and hardness lead to increases in battery capacity of the unit battery cells.

### (4) Area Adjusting Step

Next, the area adjusting step is described. In the area adjusting step, first, the respective effective areas of the plurality of unit battery cells 2000 are determined on the basis of the respective characteristics of the plurality of unit battery cells 2000 as measured in the measuring step so that the respective battery capacities of the plurality of unit battery cells 2000 fall within a predetermined range of value (step S14 of Fig. 6). Then, the respective effective areas of the plurality of unit battery cells 2000 are adjusted so that the effective areas determined in step S14 are attained (step S15 of Fig. 6). That is, in the area adjusting step, the respective effective areas of the plurality of unit battery cells 2000 are adjusted on the basis of the respective characteristics of the plurality of unit battery cells 2000 as measured in the measuring step so that the respective battery capacities of the plurality of unit battery cells 2000 fall within a predetermined range of value. The term "effective area" means an area in a unit battery cells 2000 that functions as a battery. As a result, the respective battery capacities of the plurality of unit battery cells 2000 are adjusted to fall within the predetermined range of value.

Specifically, in step S14, the respective effective areas of the plurality of unit battery cells 2000 are determined on the basis of battery capacities derived from the respective characteristics of the plurality of unit battery cells 2000 as measured in the measuring step so that the respective battery capacities of the plurality of unit battery cells 2000 fall within the predetermined range of value.

The predetermined range of value is determined by the design of battery capacity of the laminated battery 1000 or other conditions and, for example, is such a range that the respective battery capacities of the plurality of unit battery cells 2000 are substantially uniform. The predetermined range of value may be a range of ±2.5%, ±1.5%, or ±0.5% of the design value of battery capacity of a unit battery cell 2000.

The battery capacity of a unit battery cell 2000 is proportional, for example, to the area of the unit battery cell 2000. Therefore, for example, as a unit battery cell 2000 to be subjected to area adjustment, a unit battery cell 2000 having such an area that the battery capacity of a unit battery cell 2000 prior to area adjustment is assumed to be greater than the design value of battery capacity of a unit battery cell 2000 is fabricated in advance. Then, the effective area to be adjusted, i.e. to be cut back, is determined from the difference between the design value of battery capacity of a unit battery cell 2000 and the battery capacity of a unit battery cell 2000 as derived in the measuring step. For example, the effective area Y to be cut back is calculated by Y = X × (Cr - Cs)/Cr, where Cs is the design value of battery capacity of a unit batter cell 2000, Cr is the battery capacity of a unit battery cell 2000 as derived in the measuring step, and X is the effective area of a unit battery cell 2000 prior to effective area adjustment.

Further, in a case where the battery capacity of a unit battery cell 2000 as derived in the measuring step falls within the predetermined range of value, the unit battery cell 2000 may be used in the subsequent laminating step without having its effective area cut back. In the present embodiment, not cutting back the effective area too is included in the adjustment of the effective area. Further, in a case where the battery capacity of a unit battery cell 2000 as derived in the measuring step falls short of the predetermined range of value, the unit battery cell 2000 is for example discarded without being used in the subsequent laminating step.

In the area adjusting step, for example, the effective area, i.e. the actual area, is adjusted by cutting each of the plurality of unit battery cells 2000 along the direction of laminating. Figs. 10A and 10B are each a plan view for explaining an example of a site of cutting of a unit battery cell 2000. As shown in Fig. 10A, for example, the unit battery cell 2000 is cut along a dashed line C1 parallel to one side of the rectangular unit battery cell 2000 in plan view. Alternatively, as shown in Fig. 10B, the unit battery cell 2000 may be cut along a dashed line C2 passing through two orthogonal sides of the unit battery cell 2000 in plan view so that the part to be cut includes a corner of the unit batter cell 2000. Cutting along the dashed line C2 removes the corner of the unit battery cell 2000, which is susceptible to external shock, thus making it possible to enhance the reliability of the laminated battery 1000. Further, even in a case where the unit battery cell 2000 is cut by a small area, it is not necessary to remove a thin and long region as in the case of cutting along a side of the unit battery cell 2000 in plan view, so that cutting can be easily done. Although, in the illustrated example, only one part is cut, a plurality of parts may be cut.

Usable examples of cutting methods include shear cutting, score cutting, razor cutting, ultrasonic cutting, laser cutting, jet cutting, or other various cutting methods. Further, the shear cutting involves the use of various cutting blades such as a gable slit blade, a gang slit blade, a rotary chopper blade, and a shear blade. Further, the cutting may involve the use of a Thomson blade.

The method for adjusting the effective area of a unit battery cell 2000 is not limited to the adjustment of an actual area by cutting. For example, a method for adjusting an effective area by means other than cutting may involve the use of a technique for inactivating a power-generating element by laser trimming, plasma processing, warming, humidification, or other processes on the power-generating element (i.e. a site constituted by the negative-electrode active material layer 110, the positive-electrode active material layer 210, and the solid electrolyte layer 300) from an end face of the unit battery cell 2000.

Further, after step S15, the battery capacities subsequent to the effective area adjustment may be checked by measuring the respective characteristics of the plurality of unit battery cells 2000 again. Further, the effective areas of the unit battery cells 2000 may be adjusted on the basis of the battery capacities checked again.

### (5) Laminating Step

Next, the laminating step is described. In the laminating step, first, the plurality of unit battery cells 2000 the effective areas of which have been adjusted in the area adjusting step are laminated (step S16 of Fig. 6). In this way, the laminated battery 1000 is obtained.

In the laminating step, in a case where as in the case of a unit battery cell 2000, collectors are disposed at both ends of a unit battery cell 2000 in the direction of laminating, the plurality of unit battery cells 2000 are laminated such that their collectors face each other. In the case of manufacture of the series-connected laminated battery 1000, adjacent unit battery cells 2000 are laminated such that the negative-electrode collector 120 of one of the adjacent unit battery cells 2000 and the positive-electrode collector 220 of the other of the adjacent unit battery cells 2000 face each other. That is, the plurality of unit battery cells 2000 are laminated such that the negative-electrode layer 100 of one of adjacent unit battery cells 2000 and the positive-electrode layer 200 of the other of the adjacent unit battery cells 2000 are adjacent to each other. Further, in the case of manufacture of the parallel-connected laminated battery 1100, adjacent unit battery cells 2000 are laminated such that the negative-electrode or positive-electrode collectors 120 or 220 of the adjacent unit battery cells 2000 face each other. That is, the plurality of unit battery cells 2000 are laminated such that the negative-electrode or positive-electrode layers 100 or 200 of two adjacent unit battery cells 2000 are adjacent to each other.

Further, for example, adjacent unit battery cells 2000 are laminated with an conductive material sandwiched therebetween so that their collectors are electrically connected to each other. Usable examples of the conductive material include metal, conductive resin, and conductive adhesive. In a case where adjacent unit battery cells 2000 are joined by an conductive material, a robuster stack structure of unit battery cells 2000 can be formed.

Further, in the laminating step, the plurality of unit battery cells 2000 may be arranged in such an arrangement that of the plurality of unit battery cells 2000 to be laminated, two unit battery cells 2000 to be laminated to be located at both ends in the direction of laminating are both smaller in area than a unit battery cell 2000 to be laminated to be located between the two unit battery cells 2000. For example, the plurality of unit battery cells 2000 are laminated in an arrangement shown in Fig. 1. The laminated battery 1000 thus formed is structured such that the outer peripheries in plan view of the unit battery cells 2000 located at both ends in the direction of laminating do not project. This inhibits external shock from being concentrated at the outer peripheries in plan view of the unit battery cells 2000. The laminated battery 1000 thus manufactured can reduce the risk of damaging the outer peripheries in plan view of the unit battery cells 2000 located at both ends in the direction of laminating, although the unit battery cells 2000 located at both ends in the direction of laminating are susceptible to external shock.

Further, in the laminating step, the plurality of unit battery cells 2000 may be laminated in such an arrangement that of adjacent ones of the plurality of unit battery cells 2000 to be laminated, one unit battery cell 2000 located closer to an end in the direction of laminating is smaller in area than or equal in area to the other unit battery cell 2000. In the laminated battery 1000 thus formed, the area of a unit battery cell 2000 located closer to an end in the direction of laminating is smaller than the area of a unit battery cell 2000 located closer to the center in the direction of laminating, so that it is hard to give a structure in which the outer periphery in plan view of each of the unit battery cells 2000 projects. This makes it hard for external shock to be concentrated at the outer peripheries in plan view of the unit battery cells 2000, making it possible to reduce the risk of damaging the outer periphery in plan view of each of the plurality of unit battery cells 2000.

Further, in the laminating step, in a case where as in the case of the unit battery cells 2000A and 2000B shown in Figs. 8A and 8B, a collector and an active material layer are disposed at both ends of a unit battery cell in the direction of laminating, adjacent unit battery cells may be laminated such that the active material layer of one of the adjacent unit battery cells and the collector of the other of the adjacent unit battery cells face each other.

Further, in the laminating step, in a case where as in the case of the unit battery cell 2000C shown in Fig. 8C, solid electrolyte layers 300 are disposed at both ends of a unit battery cell in the direction of laminating or a solid electrolyte layer 300 and an active material layer are disposed at both ends, adjacent unit battery cells may be laminated such that the solid electrolyte layer 300 of one of the adjacent unit battery cells and the active material layer or solid electrolyte layer 300 of the other of the adjacent unit battery cells face each other.

A laminated battery can also be manufactured by laminating such unit battery cells 2000A, 2000B, or 2000C and further laminating missing collectors or active material layers as needed.

Further, in the laminating step, after the plurality of unit battery cells 2000 have been laminated, the plurality of unit battery cells 2000 thus laminated may be compressed in the direction of laminating. This makes it possible to increase the battery capacity and volume energy density of the laminated battery 1000. Further, in a case where when the plurality of unit battery cells 2000 thus laminated are compressed in the direction of laminating, the respective areas of the unit battery cells 2000 are not uniform, only a region where all of the plurality of unit battery cells overlap as seen from an angle parallel with the direction of laminating may be compressed. This makes it possible to avoid compressing a region of low mechanical strength where the plurality of unit battery cells 2000 do not overlap. This makes it possible to reduce the risk of damaging a unit battery cell 2000. For example, the region where all of the plurality of unit battery cells overlap as seen from an angle parallel with the direction of laminating is compressed by placing a jig or other pieces of equipment of identical shape with the region between a compression apparatus and the laminated battery.

Finally, if necessary, the laminated battery thus obtained is fitted with leads, a sealing member, a jacket, or other components in a step of finishing the laminated battery (step S17 of Fig. 6). It should be noted that the laminated battery may be further compressed after step S17.

As noted above, a method for manufacturing a laminated battery according to the present embodiment is a method for manufacturing a laminated battery 1000 including a stack of a plurality of unit battery cells 2000 each having a negative-electrode layer 100, a positive-electrode layer 200, and a solid electrolyte layer 300 located between the negative-electrode layer 100 and the positive-electrode layer 200. The method for manufacturing a laminated battery 1000 includes a measuring step, an area adjusting step, and a laminating step. In the measuring step, the respective characteristics of the plurality of unit battery cells 2000 are measured. In the area adjusting step, the respective effective areas of the plurality of unit battery cells 2000 are adjusted on the basis of the respective characteristics of the plurality of unit battery cells 2000 as measured in the measuring step so that the respective battery capacities of the plurality of unit battery cells 2000 fall within a predetermined range of value. In the laminating step, the plurality of unit battery cells 2000 the effective areas of which have been adjusted in the area adjusting step are laminated.

This makes it possible to manufacture a laminated battery constituted by a plurality of unit battery cells 2000 with their respective battery capacities uniform within a predetermined range of value such as a substantially uniform range, as the respective effective areas of the plurality of unit battery cells 2000, which are proportional to the battery capacities, are adjusted on the basis of the characteristics measured in the measuring step. This results in making it possible to, in a case where the series-connected laminated battery 1000 is manufactured, inhibit each of the plurality of unit battery cells 2000, for example, from being over-charged or over-discharged. Further, in a case where the parallel-connected laminated battery 1100 is manufactured, variations in current flowing through collecting leads through which a current is extracted from electrodes can be reduced. This makes it possible to reduce local heat generation of the unit battery cells 2000 attributed to an excessive rise in temperature or other factors due to the flow of an excess current. Therefore, the method for manufacturing a laminated battery according to the present embodiment makes it possible to reduce unsafe events such as degradation and heat generation of the unit battery cells 2000, making it possible to manufacture a laminated battery with enhanced reliability.

Further, as a result, a laminated battery according to the present embodiment makes it possible to precisely adjust the battery capacity of the laminated battery as a whole without varying the thickness of the laminated battery.

### (Other Embodiments)

In the foregoing, a laminated battery according to the present disclosure has been described with reference to embodiments; however, the present disclosure is not intended to be limited to these embodiments. Applications to the present embodiments of various types of modification conceived of by persons skilled in the art and other embodiments constructed by combining some constituent elements of the embodiments are encompassed in the scope of the present disclosure, provided such applications and embodiments do not depart from the spirit of the present disclosure.

For example, although, in the foregoing embodiment, the laminated battery is a series-connected or parallel-connected laminated battery, this is not intended to impose any limitation. The laminated battery may be a combination of series-connected and parallel-connected laminated batteries laminated such that the positive-electrode or negative-electrode layers of the series-connected laminated battery are electrically connected to each other.

Further, although, in the foregoing embodiment, the area of a unit battery cell located closer to an end in the direction of laminating is smaller than the area of a unit battery cell located closer to the center in the direction of laminating, this is not intended to impose any limitation. The area of a unit battery cell located closer to an end in the direction of laminating does not need to be smaller than the area of a unit battery cell located closer to the center in the direction of laminating. For example, in a case where a sealing member is disposed, a unit battery cell having a relatively small area is disposed between two unit battery cells having relatively large areas, whereby the sealing member can be placed between the two unit battery cells having relatively large areas. This allows the plurality of unit battery cells to be firmly retained by the sealing member.

Further, although, in the foregoing embodiment, the plurality of unit battery cells are separately formed by laminating and compressing layers of each of the unit battery cells, this is not intended to impose any limitation. For example, the plurality of unit battery cells may be formed by forming a unit battery cell of a size that can be divided into two or more and dividing the unit battery cell.

Further, although, in the foregoing embodiment, the respective areas of the plurality of unit battery cells of the laminated battery are different, this is not intended to impose any limitation. For example, in a case where the respective effective areas of the plurality of unit battery cells are adjusted by a technique for inactivating a power-generating element by laser trimming, plasma processing, warming, humidification, or other processes, the respective actual area of the plurality of unit battery cells may be the same.

Further, the foregoing embodiments are subject, for example, to various changes, substitutions, additions, and omissions in the scope of the claims or the scope of equivalents thereof.

### Industrial Applicability

A laminated battery according to the present disclosure may be used as a laminated battery for an electronic device, an electrical appliance, and an electric vehicle. Reference Signs List

100 negative-electrode layer
110 negative-electrode active material layer
120 negative-electrode collector
200 positive-electrode layer
210 positive-electrode active material layer
220 positive-electrode collector
300 solid electrolyte layer
310 intermediate electrode lead
320, 340 negative-electrode collecting lead
330, 350 positive-electrode collecting lead
700 sealing member
1000, 1000A, 1000B, 1100, 1100A laminated battery
2000, 2000A, 2000B, 2000C unit battery cell

## Claims

1. A method for manufacturing a laminated battery in which a plurality of unit battery cells each having a negative-electrode layer, a positive-electrode layer, and a solid electrolyte layer located between the negative-electrode layer and the positive-electrode layer are laminated, the method comprising:
a measuring step of measuring respective characteristics of the plurality of unit battery cells;
an area adjusting step of adjusting respective effective areas of the plurality of unit battery cells on the basis of the respective characteristics of the plurality of unit battery cells as measured in the measuring step so that respective battery capacities of the plurality of unit battery cells fall within a predetermined range of value; and
a laminating step of laminating the plurality of unit battery cells the effective areas of the plurality of unit battery cells being adjusted in the adjusting step.

2. The method according to claim 1, wherein in the area adjusting step, the effective areas are adjusted by cutting each of the plurality of unit battery cells.

3. The method according to claim 1 or 2, wherein in the measuring step, respective charge and discharge characteristics of the plurality of unit battery cells are measured as the characteristics.

4. The method according to claim 3, wherein in the measuring step, the charge and discharge characteristics are measured in a region lower than or equal to 10% of the battery capacities of the plurality of unit battery cells.

5. The method according to claim 3 or 4, wherein a duration of measurement of the charge and discharge characteristics is shorter than or equal to one minute.

6. The method according to claim 1 or 2, wherein in the measuring step, respective impedances of the plurality of unit battery cells are measured as the characteristics.

7. The method according to any one of claims 1 to 6, wherein in the laminating step, the plurality of unit battery cells are laminated in such an arrangement that of the plurality of unit battery cells to be laminated, two unit battery cells to be laminated to be located at both ends in a direction of laminating are both smaller in area than a unit battery cell to be laminated to be located between the two unit battery cells.

8. The method according to any one of claims 1 to 7, wherein in the laminating step, only a region where all of the plurality of unit battery cells overlap as seen from an angle parallel with a direction of laminating is compressed after the plurality of unit battery cells have been laminated.

9. A laminated battery comprising a laminated structure in which a plurality of unit battery cells each having a negative-electrode layer, a positive-electrode layer, and a solid electrolyte layer located between the negative-electrode layer and the positive-electrode layer,
wherein
respective areas of the plurality of unit battery cells are not uniform, and
of the plurality of unit battery cells, two unit battery cells located at both ends in a direction of laminating are both smaller in area than a unit battery cell located between the two unit battery cells.

10. The laminated battery according to claim 9, wherein respective battery capacities of the plurality of unit battery cells are uniform.
